# EUROPÄISCHE PATENTSCHRIFT

(11) **EP 2 212 890 B1**
(45) Veröffentlichungstag und Bekanntmachung des Hinweises auf die Patenterteilung: **14.08.2013**
(21) Anmeldenummer: 08853650.3
(22) Anmeldetag: 28.11.2008
(51) Int. Cl.: G21C 3/322, G21C 7/32

(54) **SIEDEWASSERREAKTOR UND BRENNELEMENT FÜR EINEN SIEDEWASSERREAKTOR**
BOILING WATER REACTOR AND FUEL ELEMENT FOR A BOILING WATER REACTOR
RÉACTEUR À EAU BOUILLANTE ET ÉLÉMENT DE COMBUSTION POUR RÉACTEUR À EAU BOUILLANTE

(30) Priorität: 01.12.2007 EP 07023317
(43) Veröffentlichungstag der Anmeldung: 04.08.2010
(73) Patentinhaber: AREVA GmbH, 91052 Erlangen (DE)
(72) Erfinder: REINDERS, Rudi, 91058 Erlangen (DE); WEHLE, Franz, 64380 Rossdorf (DE)
(74) Vertreter: Meissner, Bolte & Partner
(86) Internationale Anmeldenummer: PCT/EP2008/066458
(87) Internationale Veröffentlichungsnummer: WO 2009/068660

(56) Entgegenhaltungen:
- EP-A- 0 050 836
- DE-A1- 3 150 477
- JP-A- 2001 133 577
- US-A1- 2004 096 026

## Beschreibung

Die Erfindung betrifft einen Siedewasserreaktor sowie ein Brennelement für einen solchen Siedewasserreaktor. Das Brennelement umfasst eine Vielzahl von zu einem Bündel zusammengefassten Brennstäben, die mit ihrem unteren Ende auf einer unteren Halteplatte stehen. Das Brennelement umfasst außerdem einen Brennelementfuß, dessen obere Auslassöffnung der Halteplatte zugewandt ist, und dessen untere Einlassöffnung einem unteren Kerngitter des Siedewasserreaktors zugewandt ist. Der Brennelementfuß ist zwischen der oberen Auslassöffnung und der unteren Einlassöffnung entlang seiner Mittellängsachse von einem Strömungskanal durchsetzt, der im Betrieb des Reaktors von Kühlwasser durchströmt ist. Ein solches Brennelement geht beispielsweise aus der DE 31 50 477 A1 hervor.

Der Kern eines Siedewasserreaktors umfasst ein unteres Kerngitter, auf welchem die einzelnen Brennelemente mit ihrem Brennelementfuß aufstehen. Der Kühlwasserstrom tritt durch fest mit dem unteren Kerngitter verbundene Primärblenden von der Unterseite her in den Fuß der Brennelemente ein, und durchströmt diese in aufsteigender Richtung. Der Reaktorkern ist zur Erzeugung einer gewünschten Massestromverteilung des Kühlwassers üblicherweise in mehrere Zonen aufgeteilt. In einer zentralen oder ersten Zone des Reaktorkerns weist das untere Kerngitter die größten Primärblenden auf, welche innerhalb dieser Zone jeweils gleich groß sind. Der Durchmesser der Primärblenden ist in den äußeren, die erste Zone umgebenden weiteren Zonen geringer, wobei die Primärblenden innerhalb einer Zone jeweils wieder gleich groß sind. Diese Aufteilung des Reaktorkerns führt dazu, dass der Massestrom des Kühlwassers im Zentrum des Reaktorkerns hoch und in seinen Randbereichen vergleichsweise geringer ist.

Eine solche Anordnung ist beispielsweise aus der US 2004/096026 A1 bekannt.

Um die gewünschte Massestromverteilung des Kühlwassers auch dann zu erhalten, wenn dieser mit Brennelementen beladen ist, muss der Druckverlust der verwendeten Brennelemente auf die gewünschte Massestromverteilung angepasst werden. Bei der Einstellung dieses Druckverlustes ist zu beachten, dass die durch die kernseitig vorhandenen Primärblenden vorgegebene Massestromverteilung erhalten bleibt.

Am Ende jedes Betriebszyklus des Kernreaktors sind einige der Brennelemente ausgebrannt und müssen durch frische Brennelemente ersetzt werden. Dies führt zu einem sogenannten Mischkern, bei dem frische Brennelement neben älteren Brennelementen stehen, wobei frische und ältere Brennelemente unterschiedliche Druckverluste aufweisen können. Geringfügige Unterschiede in den Druckverlusten sind dabei tolerierbar, jedoch muss das neu eingesetzte Brennelement einen solchen Druckverlustbeiwert aufweisen, der die Gesamtkonzeption des Reaktorkerns nicht in Frage stellt. Druckverlust der Brennelemente wird unter Berücksichtigung des dry-out und Stabilitätsverhaltens des Reaktorkerns optimiert.

Eine aus der EP 0050836 A bekannte Möglichkeit den Druckverlustbeiwert eines Brennelementes einzustellen, besteht darin eine Ringblende in seinen Brennelementfuß zu integrieren. Diese sogenannte Sekundärblende wirkt mit der kernseitig vorhandenen Primärblende zusammen, und bestimmt den Druckverlustbeiwert des betreffenden Brennelementes. Eine weitere aus der DE 31 50 477 A1 bekannt Möglichkeit besteht darin, eine mit Durchlassöffnungen versehene Drosselplatte in den Brennelementfuß zu integrieren.

Zur gezielten Einstellung des gewünschten Druckverlustes eines Brennelementes müssen die Primärblende und die Sekundärblende jedoch aufeinander abgestimmt werden. Da die Primärblenden reaktorseitig fest mit dem unteren Kerngitter verbunden sind, ist eine Veränderung nur mit sehr großem technischem Aufwand durchführbar und daher praktisch ausgeschlossen. Zur Abstimmung bleibt also nur eine Variation der Sekundärblende. Es ist beobachtet worden, dass mit Hilfe der bekannten Sekundärblenden der Druckverlustbeiwert des Brennelementes nur in einem sehr engen Bereich variiert werden kann.

Davon ausgehend ist es die Aufgabe der vorliegenden Erfindung, ein Brennelement für einen Siedewasserreaktor mit einer alternativ ausgestalteten Sekundärblende sowie einen Siedewasserreaktor mit einem solchen Brennelement anzugeben, wobei der Druckverlust des Brennelementes insbesondere bei Verwendung unterschiedlich großer Primärblenden in einem größeren Bereich variierbar sein soll.

Die Aufgabe wird hinsichtlich des Brennelementes mit den in Anspruch 1 genannten Maßnahmen gelöst, hinsichtlich des Siedewasserreaktors wird die Aufgabe durch einen Siedewasserreaktor mit den Merkmalen nach Anspruch 9 gelöst.

Das erfindungsgemäße Brennelement für einen Siedewasserreaktor weist eine Vielzahl von zu einem Bündel zusammengefassten Brennstäben auf, die mit ihrem unteren Ende auf einer unteren Halteplatte stehen. Das Brennelement weist außerdem einen Brennelementfuß auf, dessen obere Auslassöffnung der Halteplatte zugewandt ist, und dessen untere Einlassöffnung einem unteren Kerngitter des Siedewasserreaktors zugewandt ist. Der Brennelementfuß ist zwischen der oberen Auslassöffnung und der unteren Einlassöffnung entlang seiner Mittellängsachse von einem Strömungskanal durchsetzt. Dieser ist im Betrieb des Siedewasserreaktors von Kühlwasser durchströmt. Der Brennelementfuß umfasst ein in Richtung der Mittellängsachse von der Ein- und Auslassöffnung beabstandetes Drosselelement, welches die Aufgabe einer Sekundärblende erfüllt. Dieses umfasst einen Prallkörper, der von mehreren sich quer zu der Mittellängsachse erstreckenden Stegen zentral in dem Strömungskanal gehalten wird. Der Prallkörper nimmt dabei einen Teil der Querschnittsfläche des Strömungskanals ein.

Weiterhin weist das Drosselelement einen in den Strömungskanal hineinragenden Randbereich auf. Der Randbereich erstreckt sich in einer Ebene quer zur Mittenlängsachse des Brennelementfußes, ragt radial in den Strömungskanal hinein und umschließt diesen vollumfänglich.

Der vorliegenden Erfindung liegt die folgende Überlegung zu Grunde:

Zur Einstellung des Druckverlustbeiwertes eines Brennelementes für einen Siedewasserreaktor wird in den Brennelementfuß ein Drosselelement integriert. Dieses Drosselelement umfasst als wesentliches Bauteil einen Prallkörper, der zentral in dem Strömungskanal angeordnet ist. Durch die zentrale Anordnung des Prallkörpers in dem Strömungskanal kann eine Wechselwirkung mit der Kühlwasserströmung auch bei Verwendung unterschiedlich großer Primärblenden erzwungen werden. Das in dem Strömungskanal vorliegende Geschwindigkeitsprofil der Kühlwasserströmung ist durch die Größe der entgegen der Strömungsrichtung unterhalb des Brennelementfußes angeordnete Primärblende bestimmt. In Folge der hohen Strömungsgeschwindigkeit bildet sich in dem Kühlwasser oberhalb der Primärblende eine Art Freistrahl aus, dessen Durchmesser abhängig vom Durchmesser der Primärblende variiert. Bei einer großen Primärblende füllt dieser Freistrahl nahezu den gesamten Strömungskanal des Brennelementfußes aus, während sich der Freistrahl bei einer kleinen Primärblende im Wesentlichen auf das Zentrum des Strömungskanals beschränkt. Bei Verwendung einer Kreisblende als Sekundärblende ist nun insbesondere für den Fall, dass eine kleine Primärblende vorliegt, nicht sichergestellt, dass die Sekundärblende überhaupt in nennenswerte Wechselwirkung mit dem Freistrahl tritt. Durch die genannte Ausgestaltung des Drosselelements, das die Aufgabe einer Sekundärblende erfüllt, ist unabhängig von dem Durchmesser der kernseitig vorhandenen Primärblende sichergestellt, dass das Drosselelement stets mit dem Freistrahl der Kühlwasserströmung, der das Brennelement von der Unterseite her anströmt, in Wechselwirkung tritt. Unabhängig von dem Durchmesser der Primärblende kann mit dem erfindungsgemäßen Drosselelement der für das jeweilige Brennelement geforderte Druckverlustbeiwert festgelegt werden. Der auf diese Weise durch das Drosselelement fest eingestellte Druckverlustbeiwert des Brennelementes ist, im Vergleich zu bekannten, beispielsweise mit Kreisblenden ausgestatteten Brennelementen, in einem wesentlich größeren Bereich einstellbar.

Der den Strömungskanal vollumfänglich umschliessende Randbereich erlaubt es dabei, den Widerstandsbeiwert des Brennelementes in einem größeren Bereich zu variieren, als dies ohne einen solchen Randbereich möglich wäre. Das auf den Prallkörper auftreffende Kühlwasser wird aus seiner ursprünglichen Fließrichtung abgelenkt. Diese quer zur ursprünglichen Fließrichtung des Kühlwassers gerichteten Strömungsanteile treffen auf den Randbereich, und werden durch diesen abgedrosselt. So kann durch eine Variation der Breite des Randbereiches des Drosselelementes der Widerstandsbeiwert des Brennelementes variiert werden.

Vorteilhafte Ausgestaltungen des erfindungsgemäßen Brennelementes gehen aus den von Anspruch 1 abhängigen Ansprüchen hervor. Dabei kann die Ausführungsform nach Anspruch 1 mit den Merkmalen eines, vorzugsweise mit denen mehrerer Unteransprüche kombiniert werden. Demgemäß kann das Brennelement nach der Erfindung noch die folgenden Merkmale aufweisen:

Gemäß einer Weiterbildung des Brennelementes ist der Prallkörper von in Umfangsrichtung regelmäßig angeordneten Stegen gehalten. Auch die Stege bilden einen Widerstand für das strömende Kühlwasser, so dass beispielsweise mit der Breite dieser Stege ein weiterer Parameter zur Verfügung steht, mit dem der Druckverlustbeiwert des Brennelementes beeinflusst werden kann.

Zur Feinjustage des Druckverlustes des Brennelementes sind, gemäß einer weiteren Ausführungsform, die Übergangsbereiche zwischen dem Randbereich und den Stegen sowie zwischen den Stegen und dem Prallkörper so ausgestaltet, dass der Randbereich, die Stege und der Prallkörper in einer Ebene senkrecht zu einer Mittenlängsachse des Brennelementfußes jeweils zumindest drei, sich in Umfangsrichtung des Drosselelements erstreckende, gekrümmte Durchbrüche ausbilden. Die Ecken der Durchbrüche sind kreissegmentartig abgerundet. Durch die vorgenannte Ausgestaltung des Drosselelementes wird eine einfache Möglichkeit zur Feinjustage des Widerstandsbeiwertes des Brennelementes angegeben. So kann der Widerstandsbeiwert nicht nur durch die Breite des Randbereiches, sondern auch durch die Form, Anzahl und Breite der Stege variiert werden. Die Ausgestaltung der Übergangsbereiche zwischen den Stegen und dem Rand einerseits und den Stegen und dem Prallkörper andererseits erlaubt eine zusätzliche Feinjustage. Dabei können diese Übergangsbereiche nicht nur kreissegmentartig, also abgerundet ausgestaltet sein. Es ist ebenso möglich die Durchbrüche eckig auszugestalten.

Zur weiteren Feinjustage des Druckverlustes des Drosselelementes, sind gemäß einer weiteren vorteilhaften Ausführungsform, die in Kontakt mit dem Kühlwasserstrahl stehenden Kanten des Drosselelementes scharfkantig, angefast oder abgerundet. Indem eine oder mehrere Kanten des Drosselelementes wahlweise besonders scharf oder bewusst abgerundet ausgestaltet werden, kann der Widerstandsbeiwert der entsprechenden Bauteile entweder geringfügig erhöht oder geringfügig herabgesetzt werden. Solche Maßnahmen erlauben eine weitere Feinjustage des Widerstandsbeiwertes des Drosselelementes.

Gemäß einer Ausführungsform ist der Prallkörper scheibenförmig ausgestaltet. Die Oberflächennormale des Prallkörpers ist vorzugsweise entlang der Mittenlängsachse des Brennelementfußes ausgerichtet. Nach einer Weiterbildung ist der Prallkörper als eine kreisförmige Scheibe ausgebildet. Ein scheibenförmiger Prallkörper ist fertigungstechnisch einfach herzustellen. Durch die Orientierung der Oberflächennormale des Prallkörpers gegenüber der in dem Strömungskanal vorliegenden Strömungsrichtung kann der Widerstand des Drosselelementes eingestellt werden. Bei senkrechter Stellung, also wenn die Oberflächennormale parallel zu der Mittenlängsachse orientiert ist, kann der Widerstand des Drosselelementes durch den Durchmesser des Prallkörpers eingestellt werden, wenn dieser als eine kreisförmige Scheibe ausgebildet ist.

Der Prallkörper ist, gemäß einer vorteilhaften Ausführungsform, als eine Lochscheibe ausgebildet. Nach einer Weiterbildung weist die Lochscheibe einen zentralen Durchbruch auf. Eine Lochscheibe als Prallkörper erlaubt eine Feinjustage des Widerstandes des Drosselelementes. Mit Hilfe eines zentralen Durchbruches kann eine weitere Feinjustage des Widerstandes des Prallkörpers vorgenommen werden. Ein zentraler Durchbruch ist besonders vorteilhaft, da der zentrale Bereich des Prallkörpers stets mit dem Kühlwasserstrahl in Wechselwirkung tritt. Ein zentraler Durchbruch birgt darüber hinaus fertigungstechnische Vorteile.

Der erfindungsgemäße Siedewasserreaktor weist einen in mehrere Zonen unterteilten Reaktorkern auf, dessen unteres Kerngitter verschieden große Primärblenden umfasst. Die Größe der Primärblenden ist innerhalb einer Zone gleich und variiert von Zone zu Zone. Der erfindungsgemäße Siedewasserreaktor ist mit einer Vielzahl von Brennelementen nach einem der Ansprüche 1 bis 9 beladen, die mit ihrem Brennelementfuß auf dem unteren Kerngitter aufstehen. Die in unterschiedlichen Zonen angeordneten Brennelemente weisen identische Drosselelemente auf.

Vorteilhaft kann der gesamte Reaktor mit Brennelementen eines Typs beladen werden. Mit anderen Worten ist es möglich, das in den Brennelementfuß integrierte Drosselelement so zu konstruieren, dass die Brennelemente zwischen den verschiedenen Zonen des Reaktorkerns getauscht werden können, ohne das weitere Anpassungen hinsichtlich ihres Druckverlustes nötig sind.

Gemäß einer Ausführungsform ist der Durchmesser der kernseitigen Primärblende stets kleiner als der Durchmesser der dem unteren Kerngitter zugewandten Einlassöffnung des Brennelementfußes.

Weitere vorteilhafte Ausgestaltungen des erfindungsgemäßen Brennelementes gehen aus den vorstehend nicht angesprochenen Ansprüchen sowie insbesondere aus der nachfolgend erläuterten Zeichnung hervor. In der Zeichnung sind Ausführungsbeispiele des erfindungemäßen Brennelementes in schematisierter Darstellung angedeutet. Dabei zeigen deren
Fig. 1 ein Brennelement in perspektivischer Darstellung,
Fig. 2 die Anordnung mehrerer Brennelement im Bereich des unteren Kerngitters in schematisch perspektivischer Darstellung,
Fig. 3 einen Brennelementfuß mit einem Drosselelement im Längsschnitt,
Fig. 5 eine Detailansicht eines Brennelementfußes in einem Längsschnitt und

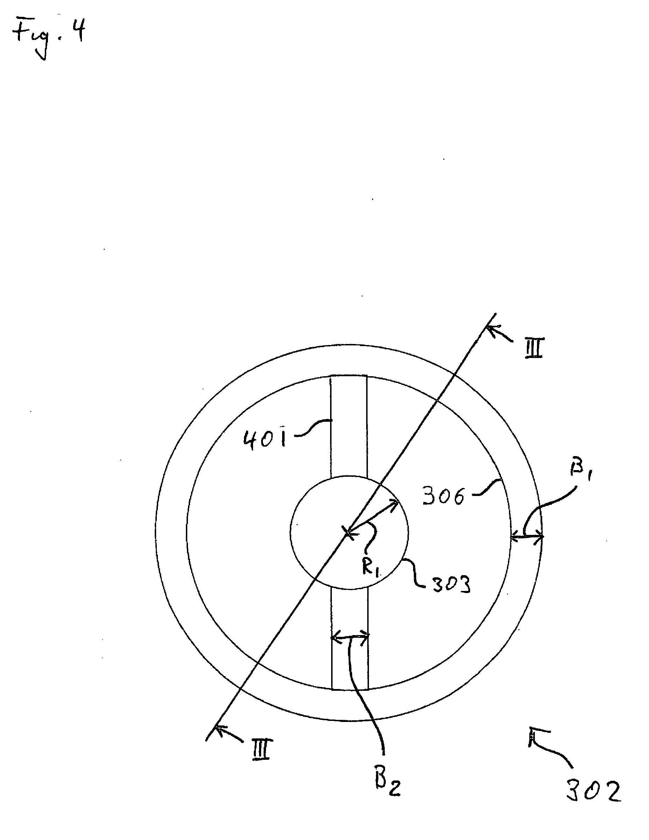

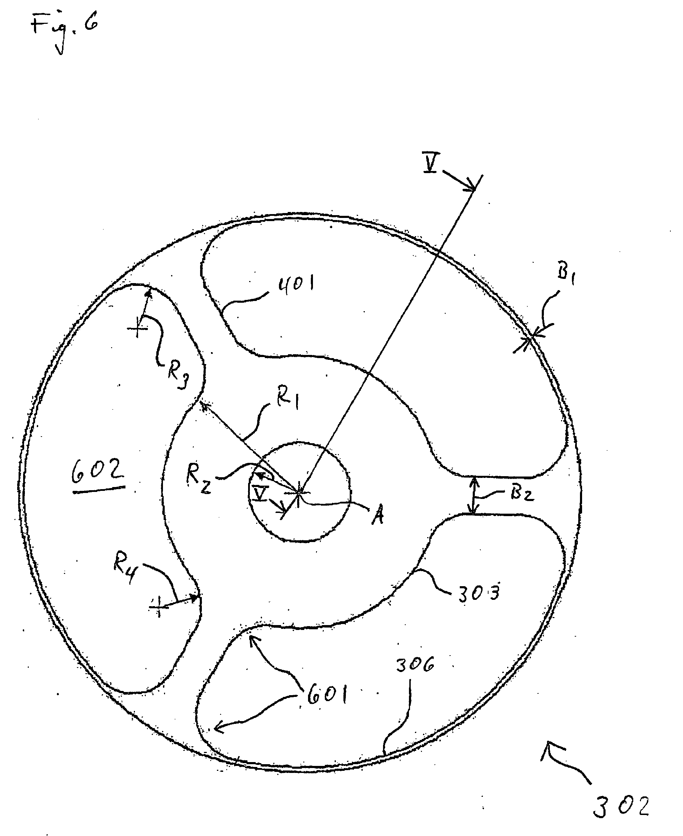

Fig. 4 und 6 jeweils ein Drosselelement in Draufsicht.

Sich in der Zeichnung entsprechende Bauteile sind mit den gleichen Bezugszeichen versehen, weitere in der Zeichnung nicht explizit erläuterte Bauteile sind allgemein bekannter Stand der Technik.

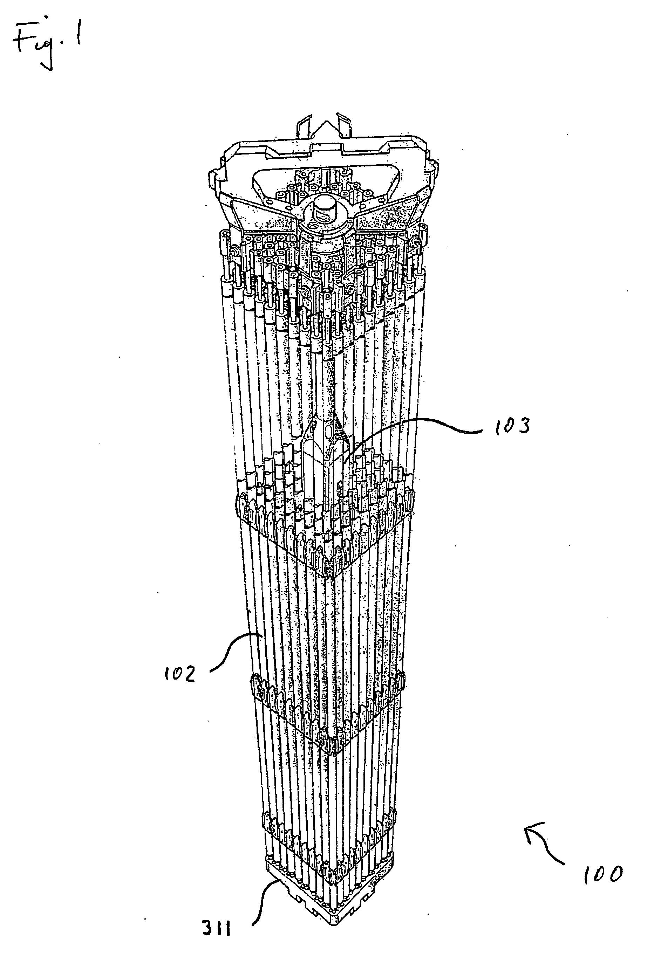

Fig. 1 zeigt ein Brennelement 100 für einen Siedewasserreaktor. Am unteren Ende des Brennelementes 100 befindet sich eine untere Halteplatte 311, auf der ein Bündel von Brennstäben 102 mit ihrer unteren Seite aufsteht. Das Bündel von Brennstäben 102 umschließt zumindest teilweise einen Wasserkanal 103, der jedoch nicht zwingend erforderlich ist. Während des Betriebs des Siedewasserreaktors wird das Brennelement 100 von seiner Unterseite her von Kühlwasser durchströmt.

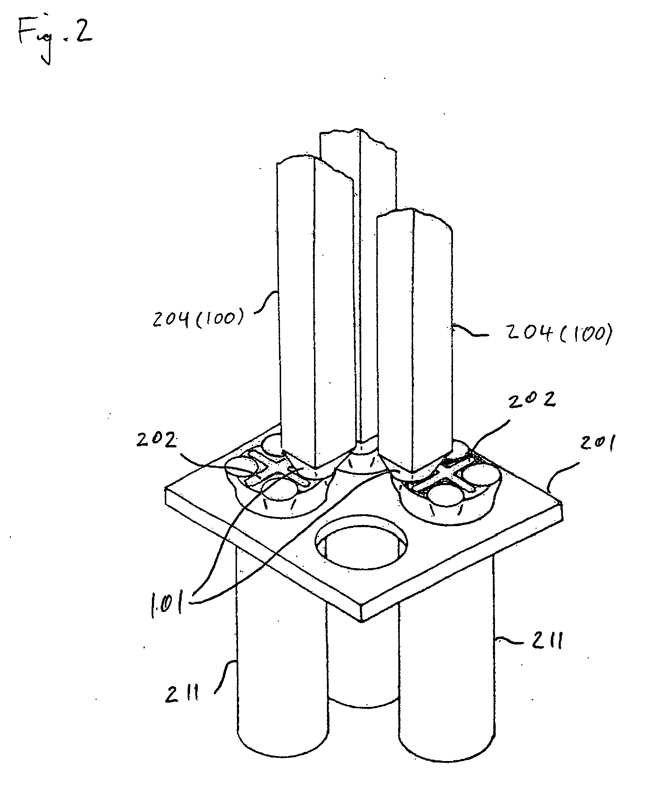

Fig. 2 zeigt eine Detailansicht im Bereich des unteren Kerngitters 201. Jeweils vier Brennelemente 100, von denen in Fig. 2 lediglich der diese umschließende Wasserkasten 204 sichtbar ist, sind oberhalb eines Zuströmrohres 205 angeordnet. In den Zuströmrohren 205 sind axial verschiebbare Steuerstäbe 202 vorhanden, welche zwischen die Brennelement 101 gefahren werden können. Die Brennelemente 100 stehen mit ihrem Brennelementfuß 101 in entsprechenden an den Zuströmrohren 205 vorhandenen Halterungen. Unmittelbar unterhalb des Brennelementfußes 101 befindet sich eine kernseitige, in Fig. 2 nicht sichtbare Primärblende, welche fest mit dem unteren Kerngitter des Reaktorkerns verbunden ist. Die Brennelemente 100 werden durch diese Primärblenden von ihrer Unterseite her mit Kühlwasser angeströmt.

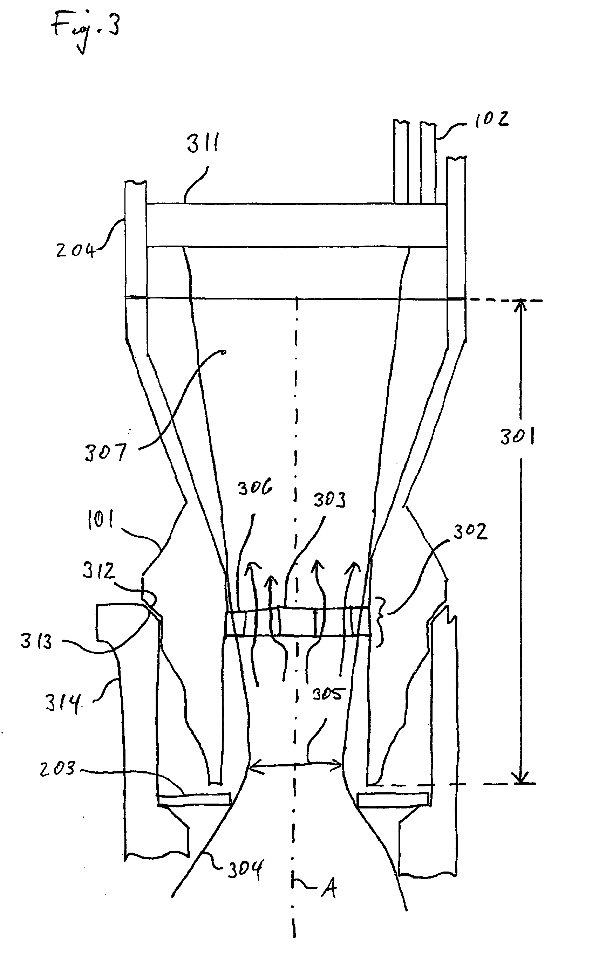

Fig. 3 zeigt einen Längsschnitt durch ein Brennelement 100 im Bereich des Brennelementfußes 101. Der Brennelementfuß 101 ist entlang seiner Mittenlängsachse A von einem Strömungskanal 301 durchsetzt. Der Strömungskanal 301 erstreckt sich zwischen der unteren Einlassöffnung und der oberen Auslassöffnung des Brennelementfußes 101. Die untere Einlassöffnung befindet sich am unteren, einer kernseitigen Primärblende 203 zugwandten Ende des Brennelementfußes 101. Am oberen Ende des Brennelementfußes 101 befindet sich die obere Auslassöffnung, hier schließt sich der Wasserkasten 204 des Brennelementes 100 an den Brennelementfuß 101 an. Im eben noch in Fig. 3 dargestellten unteren Teil des Wasserkastens 204 befindet sich die untere Halteplatte 311, auf welcher die Brennstäbe 102, von denen aus Gründen der Übersichtlichkeit lediglich zwei dargestellt sind, mit ihrem unteren Ende aufstehen. Alternativ und abweichend von dem in Fig. 3 gezeigten Ausführungsbeispiel kann der Strömungskanal 301 den Brennelementfuß 101 nicht zentral durchgreifen, sondern gegenüber der Mittellängsachse A in radialer Richtung versetzt sein. Der Brennelementfuß 101 sitzt mit einer radial umlaufenden konischen Anschlagfläche 312 auf einer entsprechenden Gegenfläche 313 der mit dem unteren Kerngitter 201, bzw. dem Zuströmrohr 211 verbundenen Haltestruktur 314 auf. In dem Strömungskanal 301 ist ein Drosselelement 302 angeordnet, welches mit dem Brennelementfuß 101 fest verbunden ist. Das Drosselelement 302 umfasst einen Prallkörper 303, der von Stegen 401 zentral in dem Strömungskanal 301 gehalten ist, sowie einen Randbereich 306, welcher am radial äußeren Rand des Strömungskanals 301 angeordnet ist. Das Drosselelement 302 wird im Zusammenhang mit Fig. 4 näher beschrieben, es ist in Fig. 3 entlang der in Fig. 4 mit III - III bezeichneten Schnittebene dargestellt.

Es sei nun zunächst hypothetisch angenommenen, dass die in Strahlrichtung betrachtet oberhalb der Primärblende 203 liegenden Bauteile nicht vorhanden sind. Das die Primärblende 203 anströmende Kühlwasser bildet in diesem Fall einen Freistrahl aus. Dieser hypothetisch angenommene Freistrahl würde, im Längsschnitt betrachtet, in etwa durch die Stromlinien 304 begrenzt. Aus hydromechanischen Gründen bildet sich oberhalb der Primärblende 203 eine Vena Contracta 305 aus. Diese Einschnürung ist derjenige Ort, an dem der angenommene Freistrahl den geringsten Querschnitt aufweist. Gemäß dem in Fig. 3 gezeigten Ausführungsbeispiel liegt die Vena Contracta 305 zwischen der Primärblende 203 und dem Drosselelement 302.

Der von den begrenzenden Stromlinien 304 umschlossene Bereich sei im Folgenden allgemein als Freistrahlbereich 307 bezeichnet. Es handelt sich dabei um einen theoretischen Bereich, der unter den oben genannten Voraussetzungen von einem Freistrahl eingenommen würde. Der Freistrahlbereich 307 dient zur Verdeutlichung der Wirkung des Drosselelementes 302. Unter realen Einsatzbedingungen eines Brennelementfußes 101, wie ihn Fig. 3 zeigt, werden auch diejenigen Bereiche des Strömungskanals 301, die außerhalb des Freistrahlbereiches 307 liegen, mit Kühlwasser gefüllt sein. Normalerweise wird das Kühlwasser jedoch in dem Freistrahlbereich 307 eine wesentlich höhere Strömungsgeschwindigkeit aufweisen.

Das in Fig. 3 gezeigte Drosselelement 302 weist einen zentral angeordneten Prallkörper 303 auf, welcher in dem Freistrahlbereich 307 mit dem Kühlwasser in Wechselwirkung tritt. Der Prallkörper 303 wird von dem Kühlwasser umströmt, was in Fig. 3 mit Pfeilen angedeutet ist. Neben dem Prallkörper 303 tritt auch der Randbereich 306 des Drosselelementes 302 mit dem Kühlwasserstrom in Wechselwirkung. Zum einen entstehen durch die Ablenkung des Kühlwassers an dem Prallkörper 303 Strömungskomponenten, die quer zu der Mittellängsachse A gerichtet sind. Diese abgelenkten Teile der Strömung treten mit dem Randbereich 306 in Wechselwirkung. Zum anderen ist nach Fig. 3 das Drosselelement 302 derart innerhalb des Brennelementfußes 101 angeordnet, so dass auch der Randbereich 306 innerhalb des Freistrahlbereiches 307 liegt. Somit werden auch die schnellen Komponenten des Kühlwasserstroms im Freistrahlbereich nicht nur indirekt, sondern auch direkt durch den Randbereich 306 abgedrosselt.

Der Prallkörper 303 des Drosselelementes 302 kann, wie in Fig. 3 dargestellt, im Wesentlichen quer zu der Mittenlängsachse A orientiert sein. Es ist jedoch ebenso möglich den Prallkörper 303 bezüglich der Mittenlängsachse A zu kippen, wodurch der Strömungswiderstand des Prallkörpers 303 verändert werden kann. In einem solchen Fall schließt die Flächennormale des Prallkörpers 303 mit der Mittenlängsachse A einen spitzen Winkel ein.

Fig. 4 zeigt ein Ausführungsbeispiel für ein Drosselelement 302 in Draufsicht. Der Prallkörper 303 wird von zwei Stegen 401 in seiner Position gehalten. Außerdem ist der Prallkörper 303 als eine geschlossene, kreisförmige Platte ausgestaltet. Es kann sich jedoch bei dem Prallkörper 303 ebenso um eine Lochscheibe mit einem oder mehreren Durchbrüchen, beispielsweise nach der Art eines Siebes handeln. Für den Prallkörper 303 sind ebenfalls weitere geometrische Formen, wie beispielsweise Würfel, Quader, Tetraeder, Kugel etc. denkbar. Der Widerstandsbeiwert des Drosselelementes 302 ist durch die Größe der Querschnittsfläche, die der Prallkörper 303 in dem Strömungskanal 301 einnimmt, seine axiale Position im Strömungskanal 301 d.h. von seinem Abstand von der Primärblende 203 und durch seine geometrische Form bestimmt. Gemäß dem in Fig. 4 gezeigten Ausführungsbeispiel wird die Querschnittsfläche des Prallkörpers 303 durch dessen Radius R₁ bestimmt.

Der Randbereich 306 umschließt das Drosselelement 302 vollumfänglich und weist eine Breite B₁ auf. Der Gesamtwiderstand des Drosselelementes 302 wird letztlich durch die Gesamtfläche, die sich aus der Breite B₁ des Randbereiches 306, der Breite B₂ der Stege 401 sowie dem Radius R₁ des Prallkörpers 303 ergibt, sowie die Form der jeweiligen Bauteile bestimmt. Das Drosselelement 302 kann beispielsweise aus Edelstahl oder einem anderen geeigneten Material gefertigt sein.

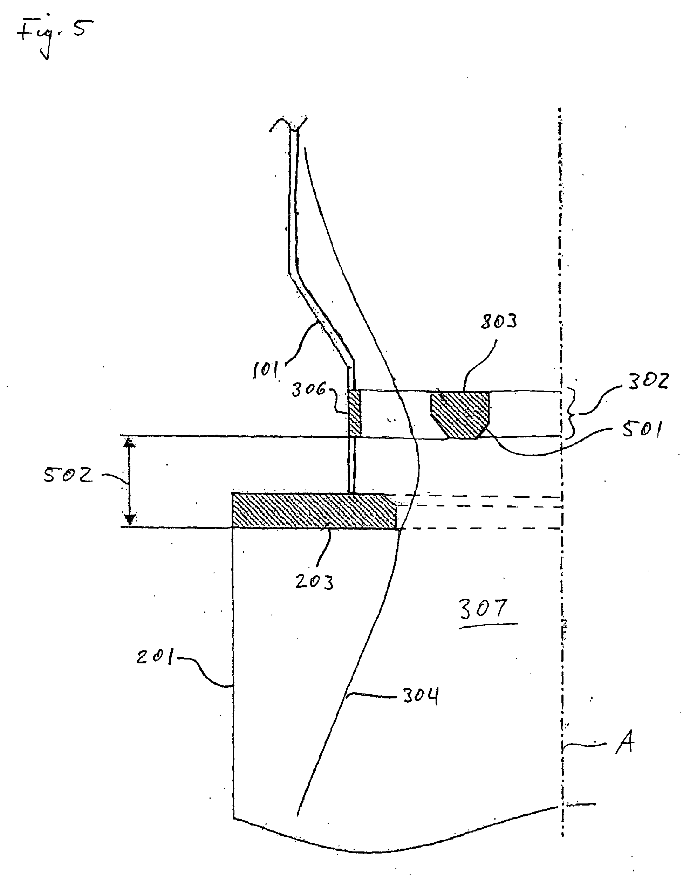

Fig. 5 zeigt einen Brennelementfuß 101 sowie Teile des unteren Kerngitters 201 in einem Längsschnitt. Der Brennelementfuß 101 sitzt im dargestellten Fall mit seinem unteren Ende direkt auf der Primärblende 203 auf. Der von dem Kühlwasserstrahl angeströmte Brennelementfuß 101 weist ein Drosselelement 302 auf, das aus einem Randbereich 306.und einem ringförmigen Prallkörper 303 besteht. Das Drosselelement 302 ist im Querschnitt entlang der in Fig. 6 mit V - V bezeichneten Linie dargestellt, sein Aufbau wird detailliert im Zusammenhang mit Fig. 6 erläutert.

Die mit dem Kühlwasserstrom in Kontakt stehenden Kanten des Drosselelements 302, insbesondere die mit dem Kühlwasserstrom in Kontakt stehenden Kanten des Prallkörpers 303 sind mit Fasen 501 versehen. Indem Teile des Drosselelementes 302 angefast werden, kann der Widerstandsbeiwert des Drosselelementes 302 geringfügig herabgesetzt werden. Das gleiche wird beispielsweise durch Abrunden der Kanten des Drosselelementes 302 erreicht. Es kann ebenso wünschenswert sein die Kanten des Drosselelementes 302 besonders scharf auszugestalten, um einen definierten Strömungsabriss an den Kanten zu erzeugen. Die entstehenden Verwirbelungen führen zu einem leichten Anstieg des Widerstandsbeiwertes.

Wie bereits im Zusammenhang mit Fig. 3 erläutert, ist auch in Fig. 5 ein Freistrahlbereich 307 angedeutet, der von den begrenzenden Stromlinien 304 umschlossen ist. Der Freistrahlbereich 307 ist durch die Größe der Primärblende 203 vorgegeben. In dem in Fig. 5 gezeigten Ausführungsbeispiel ist die Primärblende 203 verhältnismäßig klein gewählt, wie es beispielsweise in der Peripherie eines Reaktorkerns der Fall sein kann. Im Vergleich dazu würde Fig. 3 die Situation im Zentrum eines Reaktorkerns wiedergeben, denn dort ist die Primärblende 203 vergleichsweise groß gewählt. Durch die relativ kleine Primärblende 203 in Fig. 5 wird der Freistrahlbereich 307 derart verengt, dass im wesentlichen der Prallkörper 303 und nicht der Randbereich 306 mit dem Kühlwasserstrahl in Wechselwirkung tritt. Der Randbereich 306 ist in diesem Fall, wie ebenfalls bereits erläutert, lediglich indirekt wirksam.

Die Primärblende 203 und das Drosselelement 302 sind in Richtung der Mittellängsachse A durch den Abstand 502 voneinander beabstandet. Ein weiterer sensibler Parameter zur Einstellung des Druckverlustbeiwertes des Brennelementes 100 ist der Abstand 502 zwischen der Primärblende 203 und dem Drosselelement 302. Abhängig von dem Abstand 502 zwischen der Primärblende 303 und dem Drosselelement 302, wird dieses an einem Ort positioniert, an dem der Freistrahlbereich 307 eng, d.h. in der Nähe der Vena Contracta 305 oder weit ist. Abhängig vom Durchmesser des Freistrahlbereiches 307, wird, für den Fall, dass dieser einen geringen Durchmesser aufweist, lediglich der zentral in dem Strömungskanal 301 angeordneten Prallkörper 303 des Drosselelementes 302 oder zusätzlich der Rand 306 des Drosselelementes 302 mit dem Freistrahlbereich 307 des Kühlwasserstroms in Wechselwirkung treten. Mit anderen Worten weist das Drosselelement 302 einen unterschiedlichen Strömungswiderstand auf, je nachdem ob dieses mit einem engen oder einem weiten Freistrahl in Kontakt tritt. Durch Anpassung von Größe und Form des Prallkörpers 303 sowie des Randes 306 kann der von dem Drosselelement bewirkte Druckverlust auf den Durchmesser des Freistrahlbereiches 307 gezielt eingestellt werden. Dies eröffnet die Möglichkeit das Drosselelement so auszugestalten, dass es in den äußeren Zonen eines Reaktorkerns einen anderen Strömungswiderstand als in den inneren Zonen entwickelt. Beispielsweise kann das Drosselelement so ausgestaltet werden, dass dieses bei Verwendung des zugehörigen Brennelementes in den äußeren Zonen des Reaktorkerns, in denen bedingt durch die geringe Größe der reaktorseitigen Primärblenden 203, der Freistrahlbereich 307 ebenfalls vergleichsweise gering ist, einen höheren Druckverlust aufweist als in der zentralen Zone. Wird nun, wie in Fig. 5 dargestellt, der Prallkörper 303 des Drosselelementes 302 als Ringscheibe ausgeführt, so ergibt sich mit dem Durchmesser des in der Ringscheibe vorhandene Lochs ein weiterer Parameter für eine solche Anpassung.

Ein Drosselelement 302, welches einen Prallkörpers 303 von der Art einer Ringscheibe aufweist, ist in Fig. 6 in Draufsicht dargestellt. Das Drosselelement 302 weist einen Prallkörper 303 auf, der einen Außenradius R₁ und einen zentralen Durchbruch 603 mit dem Radius R₂ aufweist. Der Prallkörper 303 ist von Stegen 401 gehalten, welche mit dem Randbereich 306 verbunden sind. Der Randbereich 306 weist die Breite B₁ auf. Die Stege 401 weisen eine Breite B₂ auf.

Der Prallkörper 303 bildet gemeinsam mit den Stegen 401 und dem Randbereich 306 drei sich in Umfangsrichtung des Drosselelementes 302 erstreckende gekrümmte Durchbrüche 602 aus. Die Ecken der Durchbrüche 602 sind in den Übergangsbereichen 601 zwischen dem Prallkörper 303 und den Stegen 401 bzw. zwischen den Stegen 401 und dem Randbereich 306 kreissegmentartig abgerundet. Die Übergangsbereiche können dabei je nachdem ob es sich um einen Übergangsbereich zwischen dem Randbereich 306 und einem Steg 401 handelt, beispielsweise den Radius R₃ aufweisen und wenn es sich um einen Übergangsbereich 601 zwischen einem Steg 401 und dem Prallkörper 303 handelt, den Radius R₄ aufweisen. Die mit dem Kühlwasserstrahl in Kontakt stehenden Teile des Prallkörpers 302 können angefast, abgerundet oder scharfkantig sein.

## Patentansprüche

1. Brennelement (100) für einen Siedewasserreaktor mit einer Vielzahl von zu einem Bündel zusammengefassten Brennstäben (102), die mit ihrem unteren Ende auf einer unteren Halteplatte (311) stehen, und mit einem Brennelementfuß (101), dessen obere Auslassöffnung der Halteplatte (311) und dessen untere Einlassöffnung einem unteren Kerngitter (201) des Siedewasserreaktors zugewandt ist, der zwischen der oberen Auslassöffnung und einer unteren Einlassöffnung entlang einer Mittenlängsachse (A) von einem Strömungskanal (301) durchsetzt ist, der im Betrieb von Kühlwasser durchströmt ist, und der ein in Richtung der Mittenlängsachse (A) von der Ein- und Auslassöffnung beabstandetes Drosselelement (302) aufweist,
**dadurch gekennzeichnet**
**dass** das Drosselelement (302) einen zentral im Strömungskanal angeordneten, einen Teil der Querschnittsfläche des Strömungskanals (301) einnehmenden Prallkörper (303), einen den Prallkörper mit Radialabstand vollumfänglich umgreifenden, sich in einer Ebene quer zu der Mittenlängsachse (A) des Brennelementfußes (101) erstreckenden, radial in den Strömungskanal hinein ragenden Randbereich (306), und mehrere sich quer zur Mittenlängsachse (A) und vom Prallkörper zum Randbereich (306) erstreckende, in Umfangsrichtung des Drosselelements (302) beabstandete Stege (401) umfasst, wobei zwischen zwei in Umfangsrichtung benachbarten Stegen, dem Prallkörper und dem Randbereich jeweils ein Durchbruch (602) gebildet ist.

2. Brennelement (100) nach einem der vorstehenden Ansprüche,
**dadurch gekennzeichnet, dass**
der Prallkörper (303) von entlang seines Umfangs regelmäßig angeordneten Stegen (401) gehalten ist.

3. Brennelement (100) nach den Ansprüchen 1 oder 2,
**dadurch gekennzeichnet, dass**
die Übergangsbereiche (601) zwischen dem Randbereich (306) und den Stegen (401) sowie zwischen den Stegen (401) und dem Prallkörper (304) derart ausgestaltet sind, dass der Randbereich (306), die Stege (401) und der Prallkörper (304), in einer Ebene quer zur Mittenlängsachse (A) des Brennelementfußes (101), zumindest drei sich jeweils in Umfangsrichtung des Drosselelementes (302) erstreckende, gekrümmte Durchbrüche (602) ausbilden, deren Ecken kreissegmentartig abgerundet sind.

4. Brennelement (100) nach einem der vorstehenden Ansprüche,
**gekennzeichnet durch**
einen scheibenförmigen Prallkörper (303), dessen Oberflächennormale in Richtung der Mittenlängsachse (A) des Brennelementfußes (101) orientiert ist.

5. Brennelement (100) nach Anspruch 4,
**gekennzeichnet durch**
einen Prallkörper (303) von der Form einer Kreisscheibe.

6. Brennelement (100) nach einem der vorstehenden Ansprüche,
**gekennzeichnet durch**
eine Lochscheibe als Prallkörper (303).

7. Brennelement (100) nach Anspruch 6,
**dadurch gekennzeichnet, dass**
die Lochscheibe einen einzelnen zentralen Durchbruch (603) aufweist.

8. Brennelement (100) nach einem der vorstehenden Ansprüche,
**dadurch gekennzeichnet, dass**
die mit dem Kühlwasser in Kontakt stehenden Kanten des Drosselelementes (302) scharfkantig, angefast oder abgerundet sind.

9. Siedewasserreaktor mit einem in mehrere Zonen unterteilten Reaktorkern, dessen unteres Kerngitter verschieden große Primärblenden umfasst, deren Größe innerhalb einer Zone gleich ist und von Zone zu Zone variiert,
**gekennzeichnet durch**
eine Vielzahl von Brennelementen (100) nach einem der vorstehenden Ansprüche, die mit ihrem Brennelementfuß (101) auf dem unteren Kerngitter (201) aufstehend in dem Reaktorkern angeordnet sind, wobei die in unterschiedlichen Zonen angeordneten Brennelemente (100) identische Drosselelemente (302) aufweisen.

10. Siedewasserreaktor nach Anspruch 9,
**dadurch gekennzeichnet, dass**
der Durchmesser der Primärblende stets kleiner als der Durchmesser der dem unteren Kerngitter (201) zugewandten Einlassöffnung des Brennelementfußes (101) ist.

## Claims

1. Fuel element (100) for a boiling water reactor, having a plurality of fuel rods (102) that are combined to form a bundle, which stand with their lower end on a lower holding plate (311), and having a fuel element base (101), the upper outlet opening of which faces the holding plate (311) and the lower inlet opening of which faces a lower core grate (201) of the boiling water reactor, which is pushed through by a flow duct (301) between the upper outlet opening and a lower inlet opening along a central longitudinal axis (A), said flow duct (301) being flowed through by cooling water when operative, and having a throttle element (302) that is spaced apart from the inlet and outlet openings in the direction of the central longitudinal axis (A),
**characterised in that**,
the throttle element (302) comprises an impact body (303) that is arranged centrally in the flow duct and that receives a part of the cross-sectional surface of the flow duct (301), an edge region (306) that completely encloses the impact body at a radial distance that extends in a plane at right angles to the central longitudinal axis (A) of the fuel element base (101) and that protrudes radially into the flow duct, and several webs (401) that extend at right angles to the central longitudinal axis (A) and from the impact body to the edge region (306), and that are spaced apart in the peripheral direction of the throttle element (302), wherein a respective opening (602) is formed between two webs that are adjacent in the peripheral direction, the impact body and the edge region.

2. Fuel element (100) according to one of the preceding claims,
**characterised in that**,
the impact body (303) is held by webs (401) arranged regularly along its periphery.

3. Fuel element (100) according to claims 1 or 2,
**characterised in that**,
the transfer regions (601) between the edge region (306) and the webs (401), and between the webs (401) and the impact body (304) are configured in such a way that the edge region (306), the webs (401) and the impact body (304) form at least three curved openings (602) that extend respectively in the peripheral direction of the throttle element (302) in a plane that is at right angles to the central longitudinal axis (A) of the fuel element base (101), the corners of these openings being rounded in the manner of circle segments.

4. Fuel element (100) according to one of the preceding claims,
**characterised by**
a disc-shaped impact body (303), the surface normal of which is orientated in the direction of the central longitudinal axis (A) of the fuel element base (101).

5. Fuel element (100) according to claim 4,
**characterised by**
an impact body (303) in the form of a circular disc.

6. Fuel element (100) according to one of the preceding claims,
**characterised by**
a perforated disc as the impact body (303).

7. Fuel element (100) according to claim 6,
**characterised in that**,
the perforated disc has a single central opening (603).

8. Fuel element (100) according to one of the preceding claims,
**characterised in that**,
the edges of the throttle element (302) that are in contact with the cooling water are sharp-edged, chamfered or rounded.

9. Boiling water reactor having a reactor core divided into several zones, the lower core grate of which comprises primary apertures of various sizes, the size of which is the same within a single zone and varies from zone to zone,
**characterised by**
a plurality of fuel elements (100) according to one of the preceding claims, which are arranged standing in the reactor core with their fuel element base (101) on the lower core grate (201), wherein the fuel elements (100) arranged in different zones have identical throttle elements (302).

10. Boiling water reactor according to claim 9,
**characterised in that**,
the diameter of the primary aperture is always smaller than the diameter of the inlet opening of the fuel element base (101) that is facing the lower core grate (201).

## Revendications

1. Elément combustible (100) pour un réacteur à eau bouillante (REB) avec une pluralité de crayons combustibles (102) réunis en un faisceau, qui sont reposent avec leur extrémité inférieure sur une plaque de fixation (311) et avec un pied d'élément combustible (101) dont l'ouverture de sortie supérieure de la plaque de fixation (311) et dont l'ouverture d'entrée inférieure sont tournées vers une grille de coeur (201) inférieure du réacteur à eau bouillante (REB) qui est traversée par un canal d'écoulement (301) entre l'ouverture de sortie supérieure et une ouverture d'entrée inférieure le long d'un axe longitudinal central (A) à travers lequel, pendant le fonctionnement, s'écoule de l'eau de refroidissement et qui présente un dispositif d'étranglement (302) à distance de l'ouverture d'entrée et de l'ouverture de sortie dans la direction de l'axe longitudinal central (A)
**caractérisé en ce que** le dispositif d'étranglement (302) comprend un corps déflecteur (303) englobant une partie de la surface transversale du canal d'écoulement (301), disposé au centre du canal d'écoulement, une zone de bordure (306) enveloppant sur tout le périmètre le corps déflecteur avec espacement radial, s'étendant dans un plan transversalement à l'axe longitudinal central (A) de l'élément combustible (101) se prolongeant radialement dans le canal d'écoulement et plusieurs âmes (401) s'étendant à distance transversalement à l'axe longitudinal central (A) dans le sens périphérique du dispositif d'étranglement (302), un passage (602)étant constitué respectivement entre deux âmes voisines dans le sens périphérique, le corps déflecteur et la zone de bordure (306).

2. Elément combustible (100) selon une quelconque des revendications précédentes **caractérisé en ce que** le corps déflecteur (303) est maintenu par des âmes (401) disposées régulièrement le long de sa périphérie.

3. Elément combustible (100) selon les revendications 1 ou 2 **caractérisé en ce que** les zones de transition (601) entre la zone de bordure (306) et les âmes (401) ainsi qu'entre les âmes (401) et le corps déflecteur (304) sont constituées de telle sorte que la zone de bordure (306), les âmes (401) et le corps déflecteur (304) constituent, dans un plan transversal à l'axe longitudinal central (A) du pied d'élément combustible (101), au moins trois passages (602) courbes, s'étendant respectivement dans le sens périphérique du dispositif d'étranglement (302) dont les angles sont arrondis en forme de segments circulaires.

4. Elément combustible (100) selon une quelconque des revendications précédentes **caractérisé par** un corps déflecteur (303) en forme de disque dont la perpendiculaire de surface est orientée dans la direction de l'axe longitudinal central (A) du pied d'élément combustible (101).

5. Elément combustible (100) selon la revendications 4 **caractérisé par** un corps déflecteur (303) sous la forme d'un disque circulaire

6. Elément combustible (100) selon une quelconque des revendications précédentes **caractérisé par** un disque perforé en tant que corps déflecteur (303).

7. Elément combustible (100) selon la revendications 6 **caractérisé en ce que** le disque perforé présente un passage (603) central individuel.

8. Elément combustible (100) selon une quelconque des revendications précédentes **caractérisé en ce que** les bords de l'élément d'étranglement (302) se trouvant en contact avec l'eau de refroidissement sont tranchants, chanfreinés ou arrondis.

9. Réacteur à eau bouillante (REB) avec un coeur de réacteur divisé en plusieurs zones dont la grille de coeur inférieure comprend différents grands diaphragmes primaires dont la taille est identique à l'intérieur d'une zone et varie d'une zone à l'autre **caractérisé par** une pluralité d'éléments combustibles (100) selon une quelconque des revendications précédentes qui sont disposés avec leur pied d'élément combustible (101) sur la grille de coeur (201) reposant dans le coeur de réacteur, les éléments combustibles (100) disposés dans les différentes zones présentant des dispositifs d'étranglement (302) identiques.

10. Réacteur à eau bouillante (REB) selon la revendication 9 **caractérisé en ce que** le diamètre du diaphragme primaire est toujours plus petit que le diamètre de l'ouverture d'entrée de pied d'élément combustible (101) tourné vers la grille de coeur (201) inférieure.
